# EUROPEAN PATENT APPLICATION

(11) **EP 3 975 391 A1**
(43) Date of publication of application: **30.03.2022**
(21) Application number: 19952709.4
(22) Date of filing: 29.11.2019
(51) Int. Cl.: H02K 5/173, H02K 15/00

(54) **DISMOUNTING DEVICE FOR TRACTION MOTOR BEARING AND METHOD APPLIED TO DISMOUNTING DEVICE**

(30) Priority: 14.11.2019 CN 201911115196
(71) Applicant: CRRC Zhuzhou Electric Co., Ltd, Zhuzhou, Hunan 412000 (CN)
(72) Inventor: TANG, Zimou, Hunan 412000 (CN); SHEN, Zheng, Hunan 412000 (CN); TANG, Liming, Hunan 412000 (CN); HU, Gui, Hunan 412000 (CN); LI, Guang, Hunan 412000 (CN); CHENG, Xi, Hunan 412000 (CN); TANG, Yingwu, Hunan 412000 (CN); CUI, Siliu, Hunan 412000 (CN); ZHANG, Daolu, Hunan 412000 (CN); YANG, Ying, Hunan 412000 (CN); ZHANG, Chengcheng, Hunan 412000 (CN); WANG, Ning, Hunan 412000 (CN); QIAO, Changshuai, Hunan 412000 (CN); LIU, Xiongjian, Hunan 412000 (CN); YANG, Xiasha, Hunan 412000 (CN); YANG, Xuejun, Hunan 412000 (CN); YANG, Zhenzhong, Hunan 412000 (CN); ZHAO, Juncheng, Hunan 412000 (CN); CAO, Jiaxi, Hunan 412000 (CN); SUN, Bing, Hunan 412000 (CN)
(74) Representative: Thoma, Michael
(86) International application number: PCT/CN2019/121877
(87) International publication number: WO 2021/093037

(57) **Abstract**

Disclosed is a dismounting device for a traction motor bearing. The dismounting device comprises a positioning mechanism for being fixedly arranged on a rotor assembly and a mobile mechanism movably arranged relative to the positioning mechanism, wherein the positioning mechanism is provided with a positioning face (6), and the mobile mechanism is provided with a matching face (7) for matching the positioning face (6), such that the rotor assembly can be positioned in the radial direction and the axial direction. Compared with the prior art, the dismounting device for the traction motor bearing provided by the present application avoids the dismounting process of a bearing after a rotor assembly and a stator assembly are separated, thereby simplifying the dismounting process of a traction motor bearing, reducing the configuration requirements and cost of human resources and material resources in a bearing dismounting process, shortening the dismounting time of the traction motor bearing, and improving the working efficiency. Further disclosed is a traction motor bearing dismounting method applied to the dismounting device of the traction motor bearing.

## Description

The present application claims priority to Chinese Patent Application No. 201911115196.8, titled "DISMOUNTING DEVICE FOR TRACTION MOTOR BEARING AND METHOD APPLIED TO DISMOUNTING DEVICE", filed on November 14, 2019 with the China National Intellectual Property Administration, which is incorporated herein by reference in its entirety.

### FIELD

The present application relates to the technical field of motor maintenance, and in particular to a dismounting device for traction motor bearing. In addition, the present application further relates to a method applied to the dismounting device for said traction motor bearing.

### BACKGROUND

The development of rail transportation is becoming more and more rapid, and the requirements for operation and maintenance and the technical level of rail vehicles are also increasing. A traction motor bearing is a core stressed member. In order to ensure the safe operation of the vehicle, the maintenance of the bearing is extremely critical, and the bearing must be tested or replaced within a specified time period or a specified mileage in kilometer.

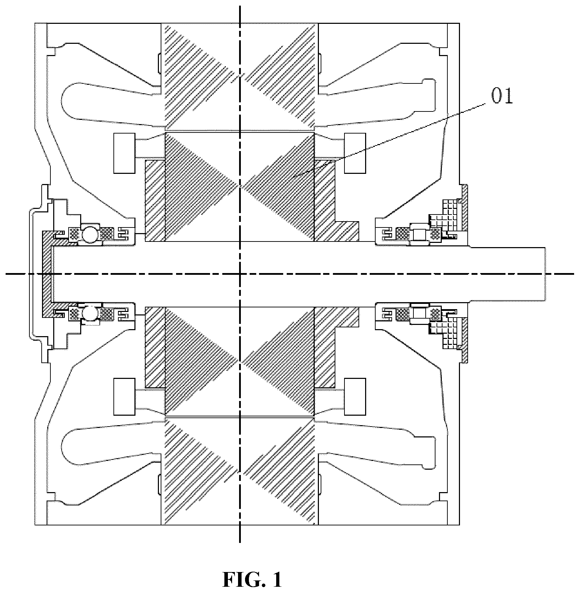

The traction motor bearing needs regular maintenance or replacement, In the conventional technology, when the traction motor bearing is overhauled or replaced, the motor needs to be dropped off and returned to the factory, and then the motor is dismounted with a special tool, the stator is separated from the rotor, and then the bearing is pulled out for detection or replacement. The entire dismounting cycle is long, the process is cumbersome, a specific site and special tooling are required, and the maintenance cost and maintenance resource consumption are large. Especially when the faulty bearing needs to be dismounted, the above process cannot be simplified, which results in a large time span for fault analysis and solution, and affects the normal production process, the mounting mode of the traction motor bearing in the conventional technology is shown in FIG. 1, in which the rotor 01 is arranged on the spindle.

In summary, how to provide a device that simplifies the dismounting process of the traction motor bearing is a problem to be solved urgently by those skilled in the art.

### SUMMARY

In view of this, an object of the present application is to provide a dismounting device for traction motor bearing, which may simplify the dismounting process of the traction motor bearing and avoid of dismounting to the rotor assembly and the stator assembly.

Another object of the present application is to provide a method for dismounting a traction motor bearing applied to the above dismounting device for traction motor bearing.

In order to achieve the above objects, the following technical solutions are provided according to the present application.

A dismounting device for traction motor bearing, which includes a positioning mechanism configured to be fixedly arranged on a rotor assembly and a mobile mechanism movably arranged relative to the positioning mechanism,

the positioning mechanism is provided with a positioning surface, and the mobile mechanism is provided with a matching surface configured to match with the positioning surface so as to position the rotor assembly in the radial direction and in the axial direction.

Preferably, the mobile mechanism is an inner bearing seat, and the matching surface is arranged on an inner side of the inner bearing seat.

Preferably, the positioning surface is an inclined surface or a spherical surface.

Preferably, in case that the positioning surface is an inclined surface, the inclination angle of the inclined surface is 40 degree - 50 degree.

Preferably, the positioning mechanism is an oil seal fixedly arranged in the rotor assembly, the positioning surface is arranged on an outer side surface of the oil seal, and the outer side surface is arranged on the oil seal in a direction away from the rotor in the rotor assembly.

Preferably, the dismounting device for traction motor bearing further includes a separation mechanism for separating the bearings, and the separation mechanism is movably arranged relative to the positioning mechanism.

Preferably, the separation mechanism is a bearing sleeve, and the bearing sleeve is provided with a snap-fit part for snap-fitting with the outer ring of the bearing.

A method for dismounting traction motor bearings, which is used for any of the above dismounting device for traction motor bearings, and includes:
position the rotor assembly in the axial direction and in the radial direction;
dismount the bearing.

Preferably, the dismounting of the bearing includes:
pull out the bearings at both ends of the rotor assembly;
mount new bearings at both ends of the rotor assembly.

Preferably, the step after mounting new bearings at both ends of the rotor assembly includes:
return and centre the rotor assembly.

The dismounting device for a traction motor bearing according to the present application includes: a positioning mechanism configured to be fixedly arranged on the rotor assembly and a mobile mechanism movably arranged relative to the positioning mechanism; the positioning mechanism is provided with a positioning surface, and the mobile mechanism is provided with a matching surface configured to match with the positioning surface so as to position the rotor assembly in the radial direction and in the axial direction.

In the process of dismounting the bearing of the traction motor, the matching surface can be matched with the positioning surface by moving the mobile mechanism to realize the positioning to the rotor assembly in the axial direction and in the radial direction. In a case of dismounting the bearings in a single-bearing motor or a motor with two inner bearing housings, the positioning to the rotor assembly can be realized only by moving the inner bearing seat and it does not need to move the rotate assembly; in a case of dismounting the bearings in a motor with only one inner bearing seat and with bearings at both ends, the rotor assembly just needs to be moved once to realize the positioning to the rotor assembly; after the rotor assembly is positioned, the bearing can be dismounted. At this time, in the process of dismounting the bearing, the position of the rotor assembly will not be affected as the rotor assembly has been positioned.

Compared with the conventional technology, the dismounting device for traction motor bearing provided by the present application avoids the process of dismounting to the rotor assembly, the dismounting process of the traction motor bearing is simplified, the dismounting time of the traction motor bearing is shortened, and the working efficiency is improved.

In addition, the present application further provides a method for dismounting a traction motor bearing used for a dismounting device for a traction motor bearing.

### BRIEF DESCRIPTION OF THE DRAWINGS

In order for a more clear illustration of technical solutions in embodiments of the present disclosure or in the conventional technology, the drawings to be used in the description of the embodiments or the conventional technology are briefly described below. Apparently, the drawings in the following description show only embodiments of the present disclosure, and those skilled in the art may obtain other drawings from the drawings without any creative effort.
FIG. 1 is a schematic diagram of the structure of a traction motor in the conventional technology;
FIG. 2 is a schematic structural diagram of the mounting position in the traction motor of the first embodiment of the traction motor bearing dismounting device provided by the present application;
FIG. 3 is a structural schematic diagram of the traction motor bearing in FIG. 2 in a ready state for dismounting;
FIG. 4 is a schematic structural diagram of the dismounting state of the traction motor bearing in FIG. 2;
FIG. 5 is a schematic structural diagram of the mounting position in the traction motor of the second embodiment of the traction motor bearing dismounting device provided by the present application;
FIG. 6 is a schematic structural diagram of the mounting position in the traction motor of the third embodiment of the traction motor bearing dismounting device provided by the present application;
FIG. 7 is a schematic structural diagram of the mounting position in the traction motor of the fourth embodiment of the traction motor bearing dismounting device provided by the present application;
FIG. 8 is a schematic cross-sectional view of the oil seal;
FIG. 9 is a schematic cross-sectional view of the bearing sleeve at the end of the ball bearing;
FIG. 10 is a schematic cross-sectional view of the bearing sleeve at the end of the column bearing;
FIG. 11 is a schematic diagram of the structure of the positioning surface and the matching surface;
FIG. 12 is a schematic flowchart of a method for dismounting a traction motor bearing provided by the present application.
In FIG. 1 to FIG. 12:
   01 rotor, 1 rotor pressing ring, 2 motor end cover, 3 oil seal, 4 bearing sleeve, 5 spindle, 6 positioning surface, 7 matching surface, 8 inner bearing seat.

### DETAILED DESCRIPTION OF THE EMBODIMENTS

Technical solutions of embodiments of the present application are clearly and completely described hereinafter in conjunction with the drawings of the embodiments of the present application. Apparently, the embodiments described in the following are only some embodiments of the present application, rather than all embodiments. Based on the embodiments in the present application, all of other embodiments, made by the person skilled in the art without any creative efforts, fall into the scope of protection of the present application.

A core of the present application is to provide a dismounting device for a traction motor bearing, which may simplify the dismounting process of the traction motor bearing. Another core of the present application is to provide a method applied to the dismounting device of the traction motor bearing.

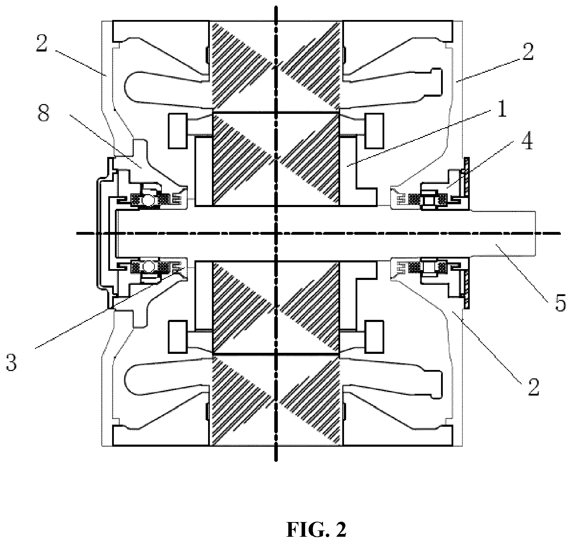

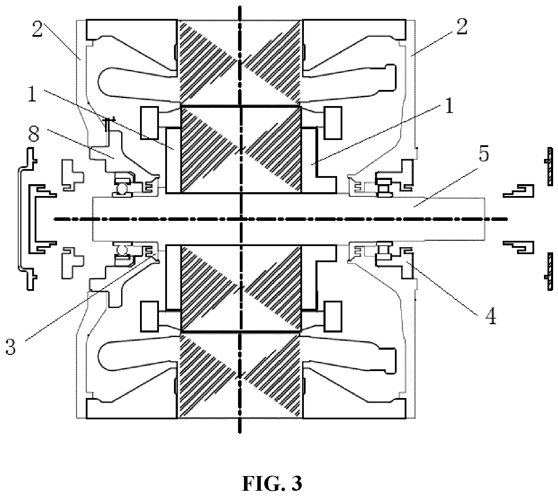

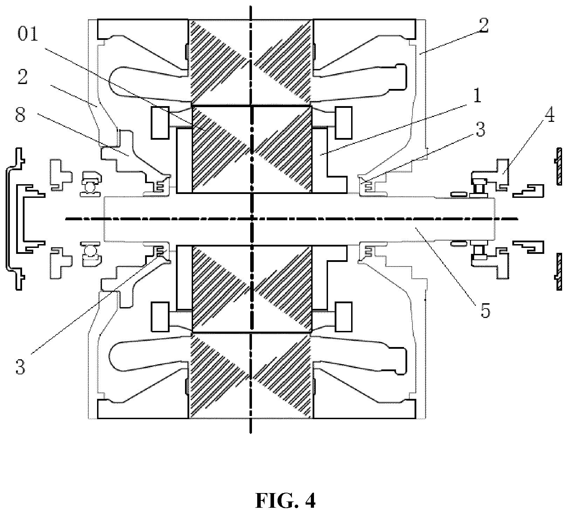

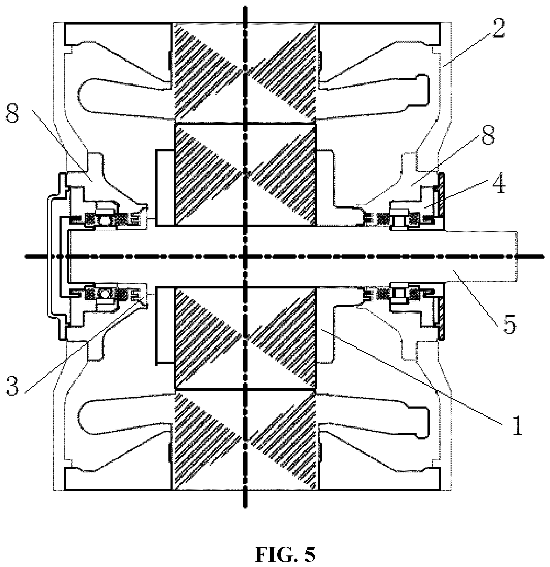

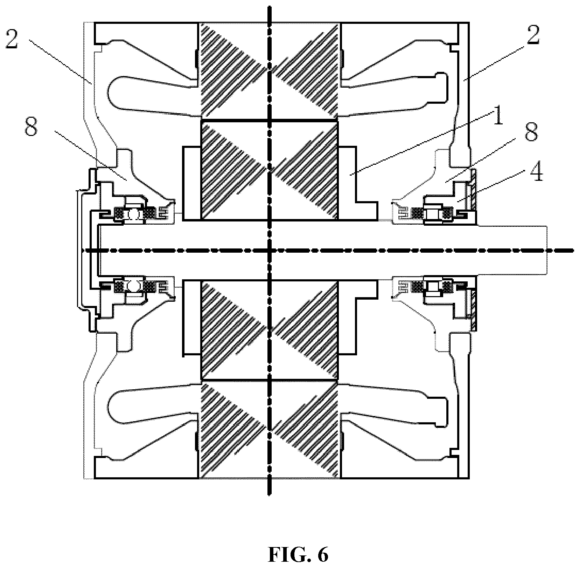

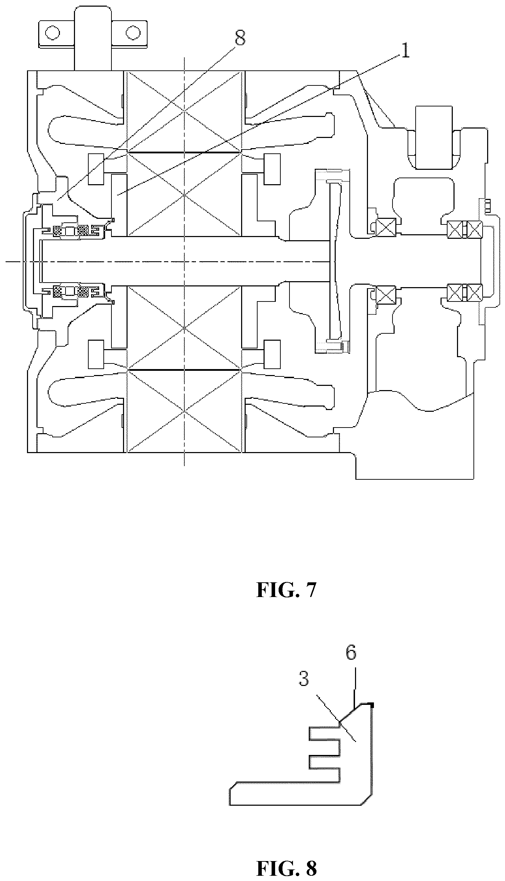

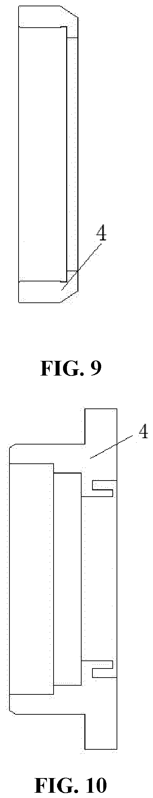

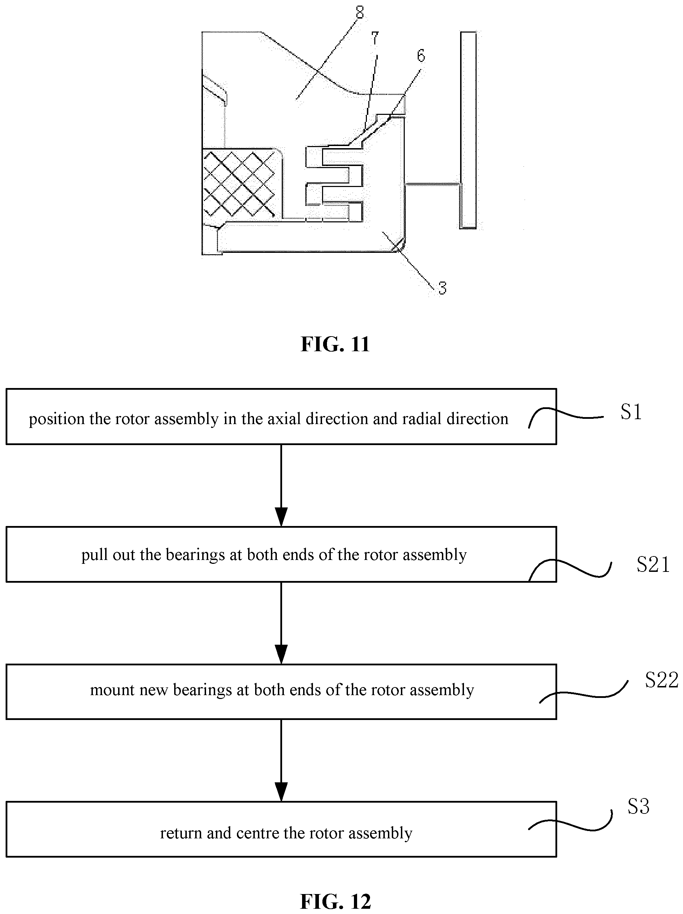

Referring to FIG. 1 to FIG. 12, FIG. 1 is a schematic diagram of the structure of a traction motor in the conventional technology; FIG. 2 is a schematic structural diagram of the mounting position in the traction motor of the first embodiment of the traction motor bearing dismounting device provided by the present application; FIG. 3 is a structural schematic diagram of the traction motor bearing in FIG. 2 in a ready state for dismounting; FIG. 4 is a schematic structural diagram of the dismounting state of the traction motor bearing in FIG. 2; FIG. 5 is a schematic structural diagram of the mounting position in the traction motor of the second embodiment of the traction motor bearing dismounting device provided by the present application; FIG. 6 is a schematic structural diagram of the mounting position in the traction motor of the third embodiment of the traction motor bearing dismounting device provided by the present application; FIG. 7 is a schematic structural diagram of the mounting position in the traction motor of the fourth embodiment of the traction motor bearing dismounting device provided by the present application; FIG. 8 is a schematic cross-sectional view of the oil seal; FIG. 9 is a schematic cross-sectional view of the bearing sleeve at the end of the ball bearing; FIG. 10 is a schematic cross-sectional view of the bearing sleeve at the end of the column bearing; FIG. 11 is a schematic diagram of the structure of the positioning surface and the matching surface; FIG. 12 is a schematic flowchart of a method for dismounting a traction motor bearing provided by the present application.

The dismounting device for a traction motor bearing provided by an embodiment of the present application includes a positioning mechanism configured to be fixedly arranged on a rotor assembly and a mobile mechanism movably relative to the positioning mechanism, where the positioning mechanism is provided with a positioning surface 6, and the mobile mechanism is provided with a matching surface 7, which matches with the positioning surface 6 so that the rotor assembly can be positioned in the radial direction and the axial direction.

In the process of dismounting the bearing of the traction motor, the matching surface 7 can be matched with the positioning surface 6 by moving the mobile mechanism so as to realize the positioning of the rotor assembly in the axial direction and radial direction. After the rotor assembly being positioned, the bearing can be dismounted. In the process of dismounting the bearing, the position of the rotor assembly will not be affected as the rotor assembly has been positioned.

Compared with the conventional technology, the dismounting device for traction motor bearing provided by the present application avoids the dismounting process of the rotor assembly, and thus the dismounting process of the traction motor bearing is simplified, the dismounting time of the traction motor bearing is shortened, and the working efficiency is improved.

It should be noted that, the dismounting device for the traction motor bearing provided in the present application can be applied to the dismounting of a double-bearing motor, and can also be applied to the dismounting of a single-bearing motor, as shown in FIG. 7.

On the basis of the above embodiment, in order to make the process of positioning the rotor assembly more convenient, the positioning surface 6 can be set as an inclined surface or a spherical surface.

The matching surface 7 is an inclined surface that cooperates with the positioning surface 6. During the two surfaces are being in contact with each other, the frictional force has horizontal and vertical component forces, which can keep the rotor assembly in position in the radial direction and the axial direction.

Considering the reliability of radial and axial positioning, the inclination angle of the matching surface 7 can be set to 40 degree - 50 degree.

Preferably, the contact angle of the matching surface 7 is 45 degree.

In a case that the positioning surface 6 is a spherical surface, the matching surface 7 is a spherical surface that cooperates with the positioning surface 6, and the specific dimension of the spherical surface needs to be determined according to the size of the oil seal 3. During the two spherical surfaces are being in contact with each other, the frictional force has horizontal and vertical component forces, which can keep the rotor assembly in position in the radial direction and in the axial direction.

On the basis of the above embodiment, in order to avoid of providing additional parts, the positioning mechanism can be an oil seal 3 fixedly arranged on the rotor assembly, as shown in FIG. 2 and FIG. 6, the positioning surface 6 is arranged on the outer side surface of the oil seal 3, and it should be understood that the outer side surface of the oil seal 3 is the side of the oil seal 3 facing away from the rotor in the rotor assembly.

As shown in FIG. 5, the positioning mechanism may also be a rotor pressing ring 1 arranged on the right side in longitudinal direction of the rotor, a positioning surface 6 is provided on the side of the rotor pressing ring 1 facing away from the rotor 01. As shown in FIG. 7, in a single-bearing motor, the positioning mechanism may also be a rotor pressing ring 1 arranged on the left side of the rotor assembly, a positioning surface 6 is provided on the side surface of the rotor pressing ring 1 facing away from the rotor 01.

On the basis of the above embodiment, the mobile mechanism may be configured as an inner bearing seat 8, and the matching surface 7 is provided on the side of the inner bearing seat 8 facing the oil seal 3.

Preferably, the inner bearing seat 8 is detachably connected to the motor end cover.

In the process of dismounting the bearing of the traction motor, for the double-bearing motor, the inner bearing seat 8 may be provided at only one end, as shown in FIG. 2, FIG. 3, and FIG. 4. The inner bearing seat 8 is only provided at the fixed end of the rotor, and is detachably connected to the motor end cover at the fixed end by bolts. In the process of dismounting, firstly, remove the connection between the inner bearing seat 8 and the motor end cover, and move the inner bearing seat 8 to the non-positioning end until the positioning surfaces 6 of the oil seals 3 at both ends of the rotor are both in contact with the matching surfaces 7, and then pull out the bearing sleeves 4 at both ends to take out the bearings, or pull out the bearing at positioning end through a preset grooves in the bearing chamber, inductively heat the inner rings of the bearing at non-positioning end, pull out the bearing at the non-positioning end, or other feasible disassembly methods, which are determined according to the actual situation; then clean the bearing chambers at both ends and add new grease, and then prepare to press a new bearings in. In the process of pressing the bearing in, firstly press the bearing into the corresponding bearing sleeve 4, then press an inner ring and an outer ring of the new bearing at the non-positioning end to the theoretical position and tighten the mounting bolt, and then press the inner ring of the new bearing at the positioning end to the mounting position. The spindle 5 is pulled to move the rotor assembly to the positioning end until the inner bearing seat 8 reaches the theoretical mounting position, tighten the mounting bolts of the inner bearing seat 8 and tighten the mounting bolts of the bearing sleeve 4. At this time, the rotor is centered and the replacement is complete.

In a case that the traction motor is a single-bearing motor, as shown in FIG. 7, a rotor pressing ring 1 is provided, and a positioning surface 6 is provided in the rotor pressing ring 1, the motor end cover is detachably connected with an inner bearing seat 8, and the inner bearing seat 8 is provided with a matching surface 7 that is matched with the positioning surface 6. Of course, the positioning surface 6 may also be arranged at any positions fixedly connected to the rotor assembly, such as the oil seal 3 or the shoulder of the spindle 5, which will not be repeated here. The steps to dismount the bearing include are as follow: remove the outer ring of the bearing and the fastening bolts, and move the inner bearing seat 8 inward to block the rotor in the radial direction to realize the positioning of the rotor assembly; and there is no need to move the rotor assembly; pull out the bearing sleeve 4 to take out the outer ring of the bearing, and induction heat to pull out the inner ring of the bearing; clean the bearing chamber and add new grease ready to press the new bearing in; press the new bearing into the bearing sleeve 4; press the outer ring of the new bearing with bearing sleeve 4 to the theoretical position and tighten the mounting bolts; press the inner ring of the new bearing to the theoretical position; tighten the mounting bolts of bearing sleeve 4 and put them in place; tighten the mounting bolts of the inner bearing seat 8 and the replacement to the bearing is complete.

It needs to be explained that because the dismounting process of the bearing in the single-bearing motor is relatively simple, it can be replaced on line, in a case that the wheel set on the bogie adopts the layout structure of the built-in axle box, the motor bearing can be replaced on line without being put down from the bracket; in a case of gauge-changeable bogies, a motor bearing on line replacement technology can be considered based on the actual structure.

In a case that both ends of the traction motor are provided with bearings as well as inner bearing seats 8, as shown in FIG. 5 and FIG. 6, in the process of dismounting the bearings of the traction motor, since the inner bearing seats 8 are provided at both ends, there is no need to move the rotor assembly. During dismounting, firstly, remove the bolts fastening the inner bearing seats 8 at both ends, and then move the inner bearing seats 8 at both ends to shorten the distance between the two inner bearing seats until the positioning surfaces 6 and the matching surfaces 7 at both ends are in the matching position and then dismount, clean and mount the bearings at both ends. After mounting, move the two inner bearing seats 8 to the mounting positions and fasten the two inner bearing seats.

On the basis of the foregoing embodiment, in order to make the dismounting process of the traction motor bearing more convenient, a separation mechanism for separating the bearing can be further provided, and the separation mechanism is movably arranged relative to the positioning mechanism.

Preferably, the separation mechanism is a bearing sleeve 4, and the bearing sleeve 4 is provided with a snap-fit part for snap-fitting with the outer ring of the bearing.

Preferably, in a case that the traction motor bearing is a ball bearing, the structure of the bearing sleeve 4 is shown in FIG. 8, and in a case that the traction motor bearing is a column bearing, the structure of the bearing sleeve 4 is shown in FIG. 9.

In addition to the above dismounting device for the traction motor bearing, a method for dismounting a traction motor bearing applied to the dismounting device for the traction motor bearing disclosed in the above embodiment is further provided according to the present application, which includes:
step S1, position the rotor assembly in the axial direction and in the radial direction.
step S2, dismount the bearing.

According to the method for dismounting traction motor bearing provided by this embodiment, in the process of dismounting the bearing, there is no need to dismount the rotor assembly, and there is no need to separate the rotor 01 from the stator, only the inner bearing seat 8 needs to be moved, the dismounting process of the bearing is simplified, and the dismounting time of the bearing is shortened.

The above step S2 includes:
step S21, pull out the bearings at both ends of the rotor assembly.
step S22, mount new bearings at both ends of the rotor assembly.

Compared with other solutions, the method in this embodiment may realize simultaneous dismounting and mounting of the bearings at both ends in a single positioning state. There is no need to repeat operations of positioning, which further simplifies the dismounting process of the bearing and shortens the dismounting time.

On the basis of the foregoing embodiment, after step S22, the method includes:
step S3, return and centre the rotor assembly.

It should be noted that, on the basis of utilizing the simplest structural parts, the dismounting device and method of the traction motor bearing provided in this application document simplifies the dismounting process of the traction motor bearing, avoids of providing additional parts, reduces the cost, no special tools are required during the dismounting process, which reduces the difficulty of dismounting the bearing; and in the process of dismounting, the axial positioning and radial positioning of the rotor assembly can be maintained, and the mounting accuracy is ensured.

The above embodiments are described in a progressive manner. Each of the embodiments is mainly focused on describing its differences from other embodiments, and reference may be made among these embodiments with respect to the same or similar parts. Any combination of all embodiments provided according to the present disclosure is within the protection scope of the present disclosure, and will not be repeated here.

The dismounting device of the traction motor bearing provided by the present application and the method applied to the device have been described in detail above. Specific examples are used in this specification to illustrate the principle and implementation of the present disclosure. The description of the above embodiments is only used to facilitate understanding of the method and core concept of the present disclosure. It should be noted that, for those skilled in the art, many improvements and modifications may be further made to the present disclosure without departing from the principle of the present disclosure, and these improvements and modifications also fall within the protection scope of claims of the present disclosure.

## Claims

1. A dismounting device for traction motor bearing, comprising a positioning mechanism configured to be fixedly arranged on a rotor assembly and a mobile mechanism movably arranged relative to the positioning mechanism;
wherein the positioning mechanism is provided with a positioning surface (6), and the mobile mechanism is provided with a matching surface (7) configured to match with the positioning surface (6) so as to position the rotor assembly in the radial direction and in the axial direction.

2. The dismounting device for traction motor bearing according to claim 1, wherein the mobile mechanism is an inner bearing seat (8) and the matching surface (7) is arranged on an inner side of the inner bearing seat (8).

3. The dismounting device for traction motor bearing according to claim 1, wherein the positioning surface (6) is an inclined surface or a spherical surface.

4. The dismounting device for traction motor bearing according to claim 3, wherein in a case that the positioning surface (6) is an inclined surface, the inclination angle of the inclined surface is 40 degree-50 degree.

5. The dismounting device for traction motor bearing according to claim 4, wherein the positioning mechanism is an oil seal (3) fixedly arranged in the rotor assembly, the positioning surface (6) is arranged on an outer side surface of the oil seal (3), and the outer side surface is arranged on the oil seal (3) in a direction away from the rotor in the rotor assembly.

6. The dismounting device for traction motor bearing according to any one of claims 1 to 5, further comprising a separation mechanism for separating the bearings, and the separation mechanism is movably arranged relative to the positioning mechanism.

7. The dismounting device for traction motor bearing according to claim 6, wherein the separation mechanism is a bearing sleeve (4), and the bearing sleeve (4) is provided with a snap-fit part for snap-fitting with the outer ring of the bearing.

8. A method for dismounting traction motor bearings used for the dismounting device for traction motor bearing according to any one of claims 1 to 7, wherein said method comprises:
position the rotor assembly in the axial direction and in the radial direction;
dismount the bearing.

9. The method for dismounting traction motor bearings according to claim 8, wherein the dismounting of the bearing comprises:
pull out the bearings at both ends of the rotor assembly;
mount new bearings at both ends of the rotor assembly.

10. The method for dismounting traction motor bearings according to claim 9, wherein the step after mounting new bearings at both ends of the rotor assembly comprises:
return and centre the rotor assembly.
